# EUROPÄISCHE PATENTSCHRIFT

(11) **EP 3 013 009 B1**
(45) Veröffentlichungstag und Bekanntmachung des Hinweises auf die Patenterteilung: **20.09.2017**
(21) Anmeldenummer: 14189885.8
(22) Anmeldetag: 22.10.2014
(51) Int. Cl.: H04L 12/801, H04L 12/26, H04L 12/44, H04L 12/931, H04L 12/935

(54) **NETZWERKANORDNUNG UND VERFAHREN ZUM ERKENNEN EINES AUSLASTUNGSEXTREMS IN EINEM KONVERGENTEN NETZWERK**
NETWORK ASSEMBLY AND METHOD FOR DETECTING A UTILISATION PEAK IN A CONVERGENT NETWORK
SYSTÈME DE RÉSEAU ET PROCÉDÉ DE RECONNAISSANCE D'UN EXTRÊME DE PLEINE CHARGE DANS UN RÉSEAU CONVERGENT

(43) Veröffentlichungstag der Anmeldung: 27.04.2016
(73) Patentinhaber: Siemens Aktiengesellschaft, 80333 München (DE)
(72) Erfinder: Götz, Franz-Josef, 91180 Heideck (DE); Klotz, Dieter, 90768 Fürth (DE)

(56) Entgegenhaltungen:
- US-A1- 2003 202 470
- US-A1- 2012 254 452
- JONGHOON LEE ET AL: "An ethernet switch architecture for bandwidth provision of broadband access networks", IEEE COMMUNICATIONS MAGAZINE, IEEE SERVICE CENTER, PISCATAWAY, US, Bd. 46, Nr. 4, 1. April 2008 (2008-04-01), Seiten 160-167, XP011226053, ISSN: 0163-6804, DOI: 10.1109/MCOM.2008.4481356
- CARLOS ROJAS ET AL: "Guidelines for Industrial Ethernet infrastructure implementation: A control engineer's guide", CEMENT INDUSTRY TECHNICAL CONFERENCE, 2010 IEEE-IAS/PCA 52ND, IEEE, PISCATAWAY, NJ, USA, 28. März 2010 (2010-03-28), Seiten 1-18, XP031679336, ISBN: 978-1-4244-6407-4

## Beschreibung

Die Erfindung betrifft ein Verfahren zum Erkennen eines Auslastungsextrems in einem konvergenten Netzwerk, insbesondere in einem industriellen Netzwerk, in dem Daten verschiedener Dienste mit gleichen bzw. unterschiedlichen Prioritäten übertragen werden, wobei eine übertragene Datenmenge von mindestens einem Dienst, insbesondere an mindestens einem sendenden oder einem empfangenden Port, während eines Diagnoseintervalls gemessen wird, wobei aus der gemessenen Datenmenge des Dienstes und der Dauer des Diagnoseintervalls ein Auslastungswert für diesen Dienst, insbesondere die verwendete Bandbreite, berechnet wird.

Die Erfindung betrifft ferner eine entsprechende Netzwerkanordnung sowie Netzwerkgeräte, die jeweils dazu geeignet sind, das erfindungsgemäße Verfahren umzusetzen.

Ein derartiges Verfahren kann in vielen Industriebereichen, insbesondere in der Automatisierungs- und Automobilindustrie sowie im Energiebereich, zum Einsatz kommen. Dort besteht die Anforderung an Kommunikationsnetzwerke anlagenweit auf Basis eines einzigen standardisierten Protokolls für alle Kommunikationsdienste, von der Feldbus-Ebene bis hin zur Geschäfts-Ebene, geeignet zu sein. Es existiert also ein konvergentes Netzwerk, in dem verschiedene Dienste und Echtzeitdienste realisiert werden sollen. Solche Netzwerke werden auch als konvergentes "Time-Sensitive Network" (TSN) bezeichnet. Beispielhaft ist hier für den industriellen Bereich die Kommunikation auf Basis des Ethernet-Protokolls zu nennen. Trotz der Koexistenz verschiedener Dienste im selben Netzwerk müssen für Echtzeit-Dienste, z. B. bei der Übertragung von Steuerungsdaten, für jeden Pfad zwischen Steuergerät und Endgerät, vorgegebene Anforderungen wie minimale Verzögerungszeiten (Low-Latency), minimale Abweichungen vom Arbeitstakt und minimale Abweichungen der Laufzeit von Datenpaketen (Low-Jitter) erfüllt werden.

Damit für jeden Kommunikations-Dienst im konvergenten Netzwerk Quality of Service (QoS), also unter anderem die Erfüllung der Anforderungen Low-Latency und Low-Jitter, garantiert werden kann, müssen temporäre oder permanente Überlasten frühzeitig erkannt und schnell behoben werden. Dies gilt sowohl für den zyklischen Datenverkehr, wie die kontinuierliche Übertragung von Steuerungsdaten (auch Control-Data-Streams oder CD-Streams) und Audio-Video-Streams (auch AV-Streams) mit einer jeweils für diese Dienste reservierten Bandbreite, als auch für den azyklischen Datenverkehr, den sogenannten Best-Effort-Traffic (BE-Traffic) ohne reservierte Bandbreite, der mit der aktuell für diesen Dienst bestmöglichen Geschwindigkeit übertragen werden soll, ohne Einschränkungen für die anderen Dienste.

Bisher verhindert Ingress-Policing an den Eingangs-Ports und Egress-Policing an den Ausgangs-Ports durch bekannte Mechanismen wie Leaky-Bucket, dass zyklische Datenströme, z. B. CD-Streams oder AV-Streams, mehr als die für sie reservierte Bandbreite verbrauchen. Hat beispielsweise ein Datenstrom seine reservierte Bandbreite verbraucht, so werden dessen Telegramme für einen bestimmten Zeitraum gelöscht.

Informationen über die tatsächlich verbrauchte Bandbreite eines Data-Streams oder des BE-Traffic an einem Port wären notwendig um zwischen einer temporären Überlast, z. B. durch einen Data-Stream oder einen BE-Traffic Stau in einem Netzwerkknoten, und einer permanenten Überlast, z. B. durch einen fehlerhaften Netzwerkknoten der ohne Unterbrechung zu viel Data-Streams oder BE-Traffic sendet, unterscheiden zu können.

Aus JONGHOON LEE ET AL, "An ethernet switch architecture for bandwidth provision of broadband access networks", IEEE COMMUNICATIONS MAGAZINE, IEEE SERVICE CENTER, PISCATAWAY, US, (20080401) vol. 46, no. 4, ISSN 0163-6804, Seiten 160-167 ist eine Ethernet Switch Architektur bekannt, die eine Identifizierung von Teilnehmer-Verkehr ohne Zugriff auf Protokolle eines höheren Levels ermöglicht.

Aus CARLOS ROJAS ET AL, "Guidelines for Industrial Ethernet infrastrucutre implementation: A control engineer's guide", CEMENT INDUSTRY TECHNICAL CONFERENCE, 2010 IEEE-IAS/PCA 52ND, IEEE, PISCATAWAY, NJ, USA, (20100328), ISBN 978-1-4244-6407-4, Seiten 1-18 ist bekannt, dass zu Diagnosezwecken der gesamte Verkehr über einen Port erfasst und separat die Art des Verkehrs bestimmt wird. Der Erfindung liegt also die Aufgabe zugrunde, in einer konvergenten Netzwerkanordnung Auslastungsextreme erkennen und unterscheiden zu können.

Der Erfindung liegt weiterhin die Aufgabe zu Grunde eine Netzwerkanordnung und entsprechende Netzwerkteilnehmer bereitzustellen, die das Verfahren durchführen können.

Diese Aufgabe wird durch ein Verfahren zum Erkennen eines Auslastungsextrems in einem industriellen konvergenten Netzwerk gemäß Anspruch 1 gelöst. Dabei werden in dem konvergenten Netzwerk Daten verschiedener Dienste übertragen wobei eine übertragene Datenmenge mindestens eines Dienstes, insbesondere an mindestens einem sendenden oder einem empfangenden Port, während eines Diagnoseintervalls gemessen wird, wobei aus der gemessenen Datenmenge des Dienstes und der Dauer des Diagnoseintervalls ein Auslastungswert für diesen Dienst und diesen Port berechnet wird, wobei die Auslastungswerte für die jeweiligen im Netzwerk vorhandenen signifikanten Dienste, für alle sendenden und/oder empfangenden signifikanten Ports berechnet werden. Der Erfindung liegt die Erkenntnis zu Grunde, dass mit den aus dem Stand der Technik bekannten Verfahren eine Erkennung von Überlastsituationen und eine Unterscheidung zwischen temporären und dauerhaften Überlastsituationen nicht oder erst zu spät möglich ist. Der Auslastungswert ist ein Maß für die Auslastung des konvergenten Netzwerks und kann beispielsweise eine benutzte Bandbreite sein.

Das erfindungsgemäße Verfahren ermöglicht die Einhaltung gewisser Kriterien, wie die eingangs genannten "Low-Jitter" und "Low-Latency" Kriterien.

In dieser Ausführungsform können Dienste gleiche oder unterschiedliche Prioritäten besitzen. Signifikante Dienste sind Dienste, die durch Ihre Beschaffenheit, Menge, Frequenz oder andere Eigenschaften relevant für den Datenfluss im Netzwerk und können diesen beispielsweise verlangsamen oder durch Überlastung ganz verhindern. In einem konvergenten Netzwerk können alle Dienste signifikant sein.

Signifikante Ports sind alle Ports deren Auslastung einen Einfluss auf den Datenfluss im Netzwerk hat, dabei müssen nicht alle Ports im Netzwerk signifikant sein.

Beispielsweise können bei redundant ausgelegten Netzwerken die redundanten Ports als nicht signifikant definiert werden, um dort Rechenleistung und Energie zu sparen. Fällt ein Port aus und die Redundanz muss einspringen, so kann dieser Port wiederum signifikant werden. Signifikant kann ein Port auch dann sein, wenn zum Beispiel mehr als 60% des Traffics über ihn abgewickelt werden.

In einer bevorzugten Ausführungsform können also alle Ports und alle Dienste signifikant sein, d. h. es wird für jeden Dienst die tatsächlich verbrauchte Bandbreite, beispielsweise die Anzahl der Bytes pro Sekunde, an jedem sendenden oder empfangenden Port gemessen. Dazu wird innerhalb einstellbarer Zeitintervalle an jedem Empfangs-Port für jeden Datenstrom und für den BE-Traffic die Anzahl der empfangenen Bytes gezählt. Analog wird innerhalb einstellbarer Zeitintervalle an jedem Sende-Port für jeden Datenstrom und für den BE-Traffic die Anzahl der gesendeten Bytes gezählt. Hierbei sind beispielsweise die Startzeitpunkte und die Dauer der Diagnoseintervalle mit einer Genauigkeit von z. B. 1 ns für jeden sendenden oder empfangenden Port und für jeden Dienst unabhängig einstellbar. Zuletzt können dann alle Auslastungswerte berechnet und weiter verarbeitet werden. Besonders vorteilhaft ist dabei, dass ständig die notwendigen Daten zur Erkennung von Auslastungsextremen zur Verfügung stehen. Erfindungsgemäß wird der Auslastungswert eines Dienstes mit einem ersten Schwellwert verglichen, und bei Überschreiten desselben eine temporäre Überlast erkannt werden. Dieser erste Schwellwert kann dabei beispielsweise fest im Speicher des Ports des Geräts selbst hinterlegt sein. Auch möglich sind im Netzwerkgerät integrierte Speicher, zentrale Speicher wie ein Server, mit Anschluss an das Netzwerk, dezentrale Speicher für jeweils eine Gruppe von Netzwerkgeräten, z. B. Verteiler wie Switches und Hubs, etc. Vorteilhaft ist hierbei, dass eine temporäre Überlast sehr schnell erkannt wird und entsprechende Gegenmaßnahmen eingeleitet werden können.

Weitere vorteilhafte Ausführungsformen ermöglichen, dass der Auslastungswert eines Dienstes mit einem Speicherwert der Maximalauslastung für diesen Dienst und/oder einem weiteren Speicherwert der globalen Maximalauslastung verglichen wird und bei Erreichen oder Überschreiten der jeweiligen hinterlegten Maximalauslastung der aktuelle Auslastungswert als jeweilige neue Maximalauslastung gespeichert wird. Speicherwerte können dabei in den bereits genannten Speichern gespeichert werden. Dies bietet den Vorteil, dass der gespeicherte Maximalauslastungswert immer für weitere Auswertungen zur Verfügung steht.

Analog kann der errechnete Auslastungswert eines Dienstes mit einem Speicherwert der Minimalauslastung für diesen Dienst und/oder einem weiteren Speicherwert der globalen Minimalauslastung verglichen werden und bei Erreichen oder Unterschreiten der jeweiligen hinterlegten Minimalauslastung der aktuelle Auslastungswert als jeweilige neue Minimalauslastung gespeichert werden. Weiterhin wird erfindungsgemäß die Summe der während der Diagnoseintervalle gemessenen übertragenen Datenmenge eines Dienstes gebildet und mit der Summe der Dauer aller Diagnoseintervalle ein Mittelwert der Netzwerkauslastung errechnet. Anhand dieses Mittelwerts können erste Indikationen erkannt werden, die beispielsweise auf eine zu geringe Auslastung des Netzwerks hindeuten können. Der Mittelwert der Netzwerkauslastung wird des Weiteren mit einem zweiten Schwellwert verglichen werden, um bei Überschreiten eine dauerhafte Netzwerküberlastung zu erkennen. Dies hat den Vorteil direkt nach der Ursache dieser dauerhaften Überlastung suchen zu können, um beispielsweise Netzwerkteilnehmer, die fehlerhaft in großen Mengen Daten senden zu identifizieren und wieder in einen regulären Betriebsmodus zu überführen.

Als vorteilhafte Ausführungsform kann ebenfalls herangezogen werden, dass die verschiedenen Schwellwerte und die lokalen und/oder globalen Maximal-/Minimalauslastungswerte dynamisch von einem Netzwerkteilnehmer oder einer übergeordneten Instanz angepasst werden können. Dies bietet den großen Vorteil, dass die Schwellwerte situativ angepasst werden können. Beispielsweise kann während der Nachtschicht oder dem Wochenende, wenn der AV-Traffic durch Abwesenheit der meisten Mitarbeiter auf ein Minimum reduziert ist, mehr Bandbreite für andere Dienste bzw. Datenarten freigegeben werden. Auf diese Weise können große Datenmengen von Backups oder aufwändige Produktionsdaten übertragen werden, ohne eine Überlastdetektion auszulösen.

Die weitere Aufgabe der Erfindung wird durch eine Netzwerkanordnung zur Durchführung des beschriebenen Verfahrens gelöst. Diese Netzwerkanordnung kann beispielsweise via Ethernet; Drahtlos via WLAN oder Bluetooth; via PowerLAN oder anderen bekannten Netzwerksystemen oder Feldbussystemen verbunden sein.

Besonders vorteilhaft ist eine Ausführungsform in der die Netzwerkanordnung Teil eines industriellen Automatisierungssystems oder daran koppelbar ist. Ebenso ist eine Lösung möglich in der diese Netzwerkanordnung in einem cyber-physischen System zum Einsatz kommt und somit eine Industry 4.0 konforme Produktion ermöglicht in der nicht nur die Produktion vernetzt ist, sondern auch das Engineering und sogar das Sourcing verknüpft ist. Damit werden beispielsweise Kleinserien effizienter produzierbar.

Weiterhin vorteilhaft wird die Aufgabe dadurch gelöst, diverse Netzwerkgeräte zur Verfügung zu stellen, die zur Durchführung des Verfahrens und zur Integration in die Netzwerkanordnung geeignet sind. Zu nennen sind hier unter anderem Switches, Hubs, Router, Netzwerkadapter oder weitere Netzwerkverteiler und Schnittstellen. Auch Industriesteuerungen mit entsprechenden Ports sowie weitere Industrielle Steuerungs- und Schaltanwendungen können hier zum Einsatz kommen.

Mit den vorliegenden Ausführungsformen ist nun die Unterscheidung ob eine temporäre oder eine permanente Überlast vorliegt möglich, und es kann für jeden signifikanten Empfangs- bzw. Sende-Port und für jeden signifikanten Dienst eine Aussage getroffen werden. Es können dabei also auch mehrere Dienste überwacht werden, insbesondere Best-Effort-, Control-Data- oder Audio-Video-Dienste. Die Erkennung bzw. Unterscheidung einer temporären oder permanenten Überlast beim zyklischen Datenverkehr (CD-Streams, AV-Streams) oder beim azyklischen Datenverkehr (BE-Traffic) in einem konvergenten Netzwerk ermöglicht schnelle und wirksame Gegenmaßnahmen wie z. B. bei einer permanenten Überlastsituation beim Empfang eines Data-Streams das Verwerfen des betroffenen Data-Streams. Die schnelle Erkennung einer Überlast und eine daraus folgende schnelle Reaktion erleichtert im industriellen Bereich den Einsatz unterschiedlicher Dienste wie CD-Streams, AV-Streams, BE-Traffic in einem konvergenten Netzwerk. Die Möglichkeit diese unterschiedlichen Dienste im selben Netzwerk einsetzen zu können, erhöht nicht nur die Leistungsfähigkeit der industriellen Kommunikation sondern senkt auch durch Reduzierung der benötigten Netzwerk-Komponenten für ein konvergentes Netz die Netzwerk-Kosten und die Produkteinführungszeiten im Vergleich zu Netzwerken die auf einzelne Dienste spezialisiert sind.

Im Folgenden wird die Erfindung anhand der in den Figuren dargestellten Ausführungsbeispiele näher beschrieben und erläutert. Es zeigen:
- FIG 1: eine konvergente Netzwerkanordnung,
- FIG 2: einen Arbeitstakt in einer konvergenten Netzwerkanordnung,
- FIG 3: einen beispielhaften Datenstrom in einer konvergenten Netzwerkanordnung.

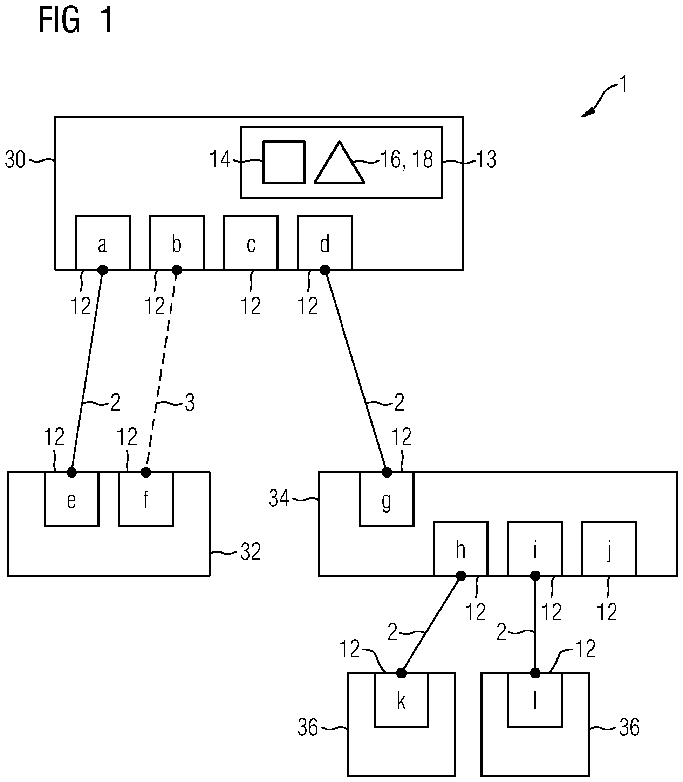

Die FIG 1 zeigt eine Ausführungsform einer konvergenten Netzwerkanordnung 1 die aus mehreren verschiedenartigen Netzwerkteilnehmern 30, 32, 34 und 36 besteht. Ein zentraler Netzwerkverteiler 30 ist dabei durch seine Ports 12a und 12b mit einem redundant angebundenen Netzwerkgerät 32 über eine Netzwerkverbindung 2 und eine redundante Netzwerkverbindung 3 durch dessen Ports 12e und 12f verbunden. Die redundante Netzwerkverbindung 3 wird erst dann aktiviert wenn die Netzwerkverbindung 2 nicht mehr ordnungsgemäß funktioniert. Solange die Netzwerkverbindung 2 ordnungsgemäß funktioniert können die zugehörigen Ports 12a und 12e signifikant sein und ein erfindungsgemäßes Verfahren durchgeführt werden. Im Fehlerfall wird die Netzwerkverbindung 2 deaktiviert, die Ports 12a und 12e sind nicht mehr signifikant, die redundante Netzwerkverbindung 3 wird aktiviert und die Ports 12b und 12f werden signifikant. Weiterhin ist der zentrale Netzwerkverteiler 30 durch Port 12d mit einem weiteren Netzwerkverteiler 34 über eine Netzwerkverbindung 2 durch dessen Port 12g verbunden. Port 12c wird nicht benutzt und ist folglich nicht signifikant. In einem Speicher 13 des zentralen Netzwerkverteilers 30 sind exemplarisch Speicherwerte 14 und Schwellwerte 16 hinterlegt. Es wäre auch denkbar, dass jedes der Netzwerkgeräte 30, 32, 34 und 36 einen eigenen Speicher 13 besitzt oder alternativ alle weiteren Netzwerkverteiler 34 einen Speicher 13 besitzen.

Die Netzwerkendgeräte 36, beispielsweise PCs, Bedienschnittstellen für Industriesteuerungen, Industriesteuerungen oder weitere Netzwerkfähige Geräte, sind über je eine Netzwerkverbindung 2 mit den Ports 12h und 12i des Netzwerkverteilers 34 verbunden. Ob diese Ports und die Daten, die darüber gesendet und/oder empfangen werden, signifikant sind, hängt von der Anwendung ab. Beispielsweise kann es sich um ein Endgerät handeln, dem in der Produktion eine wichtige Rolle zukommt und das Datenaufkommen sehr hoch ist, so empfiehlt es sich die beteiligten Ports als signifikante Ports zu definieren.

Die Netzwerkanordnung 1 muss nicht physikalisch realisiert sein sondern kann teilweise oder ganz virtualisiert realisiert sein.

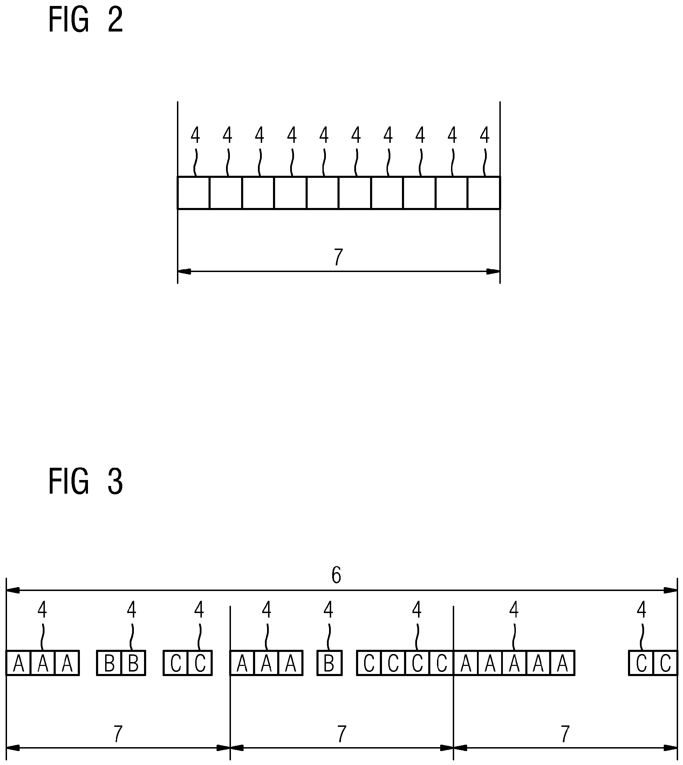

Die FIG 2 zeigt exemplarisch einen Arbeitstakt 7 der konvergenten Netzwerkanordnung 1 bei dem die maximale Datenmenge übertragen wird. Die Datenblöcke 4 repräsentieren dabei die kleinstmögliche Einheit in der Daten übertragen werden können, beispielsweise 1 Byte. Je nach Netzwerk können diese kleinstmöglichen Datenblöcke 4 auch größer oder kleiner als ein Byte sein. In diesem Beispiel ist den Datenblöcken 4 noch kein Dienst A, B, oder C zugeordnet worden. Die Dienste sind, abhängig vom jeweiligen Netzwerk und dessen Anwendungsbereich, dementsprechend vielfältig und nicht nur auf A, B, oder C beschränkt.

Die FIG 3 zeigt exemplarisch die Datenübertragung an einem sendenden oder empfangenden Port 12. Dabei ist ein Arbeitstakt 7 das kleinstmögliche Intervall während dem Daten übertragen werden können. Jedem Datenblock 4 ist ein Dienst A, B, C zugeordnet, der wiederum darüber entscheidet ob dieser Dienst signifikant ist und somit durch das erfindungsgemäße Verfahren erfasst werden soll. Weiterhin sichtbar ist das Diagnoseintervall 6, das sich in diesem Fall über drei Arbeitstakte erstreckt, aber ebenso beliebige weitere Vielfache des Arbeitstakts annehmen kann. Es wird beispielsweise die Datenmenge, also die Summe aller Datenblöcke 4 des Dienstes A, die während der Arbeitstakte 7 die im Diagnoseintervall 6 liegen, gezählt um dann aus der Dauer des Diagnoseintervalls 6 einen Auslastungswert, beispielswese die Bandbreite, zu berechnen.

Zusammenfassend betrifft die Erfindung ein Verfahren zum Erkennen eines Auslastungsextrems in einem konvergenten Netzwerk, insbesondere in einem industriellen Netzwerk und/oder einem "Time-Sensitive Network" (TSN), in dem Daten verschiedener Dienste mit gleichen bzw. unterschiedlichen Prioritäten übertragen werden. Eine übertragene Datenmenge mindestens eines Dienstes, wird insbesondere an mindestens einem sendenden oder einem empfangenden Port, während eines Diagnoseintervalls gemessen. Aus der gemessenen Datenmenge des Dienstes und der Dauer des Diagnoseintervalls wird ein Auslastungswert für diesen Dienst und diesen Port berechnet. Dabei werden die Auslastungswerte für die jeweiligen im Netzwerk vorhandenen signifikanten Dienste, für alle sendenden und/oder empfangenden signifikanten Ports berechnet. Eine entsprechende Netzwerkanordnung zur Durchführung des Verfahrens ist ebenfalls Teil der Erfindung. Der Erfindung liegt die Aufgabe zugrunde, in einer konvergenten Netzwerkanordnung Auslastungsextreme erkennen und unterscheiden zu können.

## Patentansprüche

1. Verfahren zum Erkennen eines Auslastungsextrems in einem industriellen konvergenten Time-Sensitive Netzwerk (1), in dem Daten (4) verschiedener Dienste (A, B, C) übertragen werden,
wobei zumindest einer der Dienste (A, B, C) Steuerungsdaten überträgt und ein weiterer der Dienste (A, B, C) azyklische Daten in Form von Best-Effort-Traffic überträgt, wobei eine übertragene Datenmenge mindestens eines der Dienste (A, B, C) an mindestens einem sendenden oder einem empfangenden Port (12) während eines Diagnoseintervalls (6) gemessen wird, **dadurch gekennzeichnet, dass** jeweils aus der gemessenen Datenmenge des jeweiligen Dienstes (A, B, C) und der Dauer des Diagnoseintervalls (6) jeweils ein Auslastungswert für den jeweiligen Dienst (A, B, C) und diesen Port (12) berechnet werden und
wobei die Auslastungswerte für die jeweiligen im Netzwerk vorhandenen signifikanten Dienste (A, B, C) für alle sendenden und/oder empfangenden signifikanten Ports (12) berechnet werden,
wobei signifikante Dienste (A,B,C) solche Dienste sind, die durch ihre Beschaffenheit, Menge, Frequenz oder andere Eigenschaften relevant für einen Datenfluss im Netzwerk sind, wobei signifikante Ports (12) solche Ports sind, deren Auslastung einen Einfluss auf den Datenfluss im Netzwerk haben,
wobei der Auslastungswert eines signifikanten Dienstes (A, B, C) pro signifikantem Port (12) mit einem ersten Schwellwert (16) verglichen wird, und bei Überschreiten desselben eine temporäre Überlast erkannt wird, wobei pro signifikantem Port (12) eine Summe der während der Diagnoseintervalle (6) gemessenen übertragenen Datenmenge des jeweiligen signifikanten Dienstes (A, B, C) für alle signifikanten Ports (12) gebildet wird und mit einer Summe der Dauer aller Diagnoseintervalle (6) ein Mittelwert der Netzwerkauslastung für die jeweiligen im Netzwerk vorhandenen signifikanten Dienste (A, B, C) errechnet wird,
wobei der Mittelwert der Netzwerkauslastung mit einem zweiten Schwellwert (18) verglichen wird und bei Überschreiten eine dauerhafte Netzwerküberlastung durch den jeweiligen der signifikanten Dienste erkannt wird.

2. Verfahren nach einem der vorhergehenden Ansprüche,
**dadurch gekennzeichnet, dass** der Auslastungswert eines Dienstes (A, B, C) mit einem Speicherwert (14) der Maximalauslastung für diesen Dienst und/oder einem weiteren Speicherwert (14) der globalen Maximalauslastung verglichen wird und bei Erreichen oder Überschreiten der jeweiligen hinterlegten Maximalauslastung der aktuelle Auslastungswert als jeweilige neue Maximalauslastung gespeichert wird.

3. Verfahren nach einem der vorhergehenden Ansprüche,
**dadurch gekennzeichnet, dass** der errechnete Auslastungswert eines Dienstes mit einem Speicherwert (14) der Minimalauslastung für diesen Dienst und/oder einem weiteren Speicherwert (14) der globalen Minimalauslastung verglichen wird und bei Erreichen oder Unterschreiten der jeweiligen hinterlegten Minimalauslastung der aktuelle Auslastungswert als jeweilige neue Minimalauslastung gespeichert wird.

4. Verfahren nach einem der vorhergehenden Ansprüche,
**dadurch gekennzeichnet, dass** die verschiedenen Schwellwerte (16, 18) dynamisch von einem Netzwerkteilnehmer (30, 32, 34, 36) oder einer übergeordneten Instanz angepasst werden können.

5. Netzwerkgerät zur Durchführung eines Verfahrens nach einem der Ansprüche 1 bis 4, insbesondere Switches, Hubs, Router, Netzwerkadapter oder weitere Netzwerkverteiler.

6. Netzwerkanordnung mit mindestens einem Netzwerkgerät nach Anspruch 5.

7. Netzwerkanordnung nach Anspruch 6,
**dadurch gekennzeichnet,**
**dass** die Netzwerkanordnung Teil eines industriellen Automatisierungssystems oder daran koppelbar ist.

## Claims

1. Method for detecting a utilisation peak in an industrial convergent time-sensitive network (1), in which data (4) from various services (A, B, C) is transmitted, wherein at least one of the services (A, B, C) transmits control data and a further of the services (A, B, C) transmits acyclic data in the form of best effort traffic, wherein a transmitted data quantity of at least of one of the services (A, B, C) is measured on at least one sending or one receiving port (12) during a diagnosis interval (6),
**characterised in that**
a utilisation value for the respective service (A, B, C) and this port (12) are calculated in each case from the measured data quantity of the respective service (A, B, C) and the duration of the diagnosis interval (6) in each case and wherein the utilisation values for the respective significant services (A, B, C) present in the network are calculated for all sending and/or receiving significant ports (12),
wherein significant services (A, B, C) are those services which, on account of their condition, quantity, frequency or other properties, are relevant to a data flow in the network, wherein significant ports (12) are those ports whose utilisation has an influence on the data flow in the network, wherein the utilisation value of a significant service (A, B, C) per significant port (12) is compared with a first threshold value (16) and when the same is exceeded, a temporary overload is detected, wherein per significant port (12), a sum of the transmitted data quantity of the respective significant service (A, B, C) measured during the diagnosis interval (6) is formed for all significant ports (12) and with a sum of the duration of all diagnosis intervals (6) an average value of the network utilisation for the respective significant services (A, B, C) present in the network is detected,
wherein the average value of the network utilisation is compared with a second threshold value (18) and when a permanent network overload is exceeded is detected by the respective significant service.

2. Method according to one of the preceding claims, **characterised in that** the utilisation value of a service (A, B, C) is compared with a storage value (14) of the maximum utilisation for this service and/or a further storage value (14) of the global maximum utilisation and when the respectively stored maximum utilisation is reached or exceeded, the current utilisation value is stored as the respective new maximum utilisation.

3. Method according to one of the preceding claims, **characterised in that** the calculated utilisation value of a service is compared with a storage value (14) of the minimal utilisation for this service and/or a further storage value (14) of the global minimal utilisation and when the respectively stored minimal utilisation is reached or exceeded, the current utilisation value is stored as the respective new minimal utilisation.

4. Method according to one of the preceding claims, **characterised in that** the various threshold values (16, 18) can be adjusted dynamically by a network subscriber (30, 32, 34, 36) or a higher-order entity.

5. Network device for carrying out a method according to one of claims 1 to 4, in particular switches, hubs, routers, network adapters or further network distributors.

6. Network assembly with at least one network device according to claim 5.

7. Network assembly according to claim 6, **characterised in that** the network assembly is part of an industrial automation system or can be coupled thereto.

## Revendications

1. Procédé de détection d'un pic d'utilisation dans un réseau (1) industriel convergent time-sensitive, dans lequel des données (4) de divers services (A, B, C) sont transmises, dans lequel au moins l'un des services (A, B, C) transmet des données de commande et un autre des services (A, B, C) transmet des données acycliques sous la forme de Best-Effort-Traffic,
dans lequel on mesure, pendant un intervalle (6) de diagnostic, une quantité de données transmises, d'au moins l'un des services (A, B, C ), sur au moins un accès (12) d'émission ou de réception,
**caractérisé en ce que**
on calcule, à partir de la quantité de données mesurées du service (A, B, C) respectif et de la durée de l'intervalle (6) de diagnostic, respectivement une valeur d'utilisation du service (A, B, C) respectif et de cet accès (12) et dans lequel on calcule les valeurs d'utilisation pour les services (A, B, C) significatifs présents dans le réseau, pour tous les accès (12) significatifs d'émission et/ou de réception,
dans lequel des services (A, B, C) significatifs sont des services qui, par leur nature, quantité, fréquence ou autres propriétés, sont pertinents pour un flux de données dans le réseau, des accès (12) significatifs étant des accès, dont l'utilisation a une influence sur le flux de données dans le réseau,
dans lequel on compare la valeur d'utilisation d'un service (A, B, C) significatif, par accès (12) significatif, à une première valeur (16) de seuil et, si celle-ci est dépassée, on détecte une surcharge temporaire, dans lequel, par accès (12) significatif, on forme une somme de la quantité de données transmises mesurée pendant l'intervalle (6) de diagnostic du service (A, B, C) significatif pour tous les accès (12) significatifs, et on calcule, par une somme de la durée de tous les intervalles (6) de diagnostic, une valeur moyenne de l'utilisation du réseau, pour les services (A, B, C) significatifs présents dans le réseau,
dans lequel on compare la valeur moyenne de l'utilisation du réseau à une deuxième valeur (18) de seuil et, si il y a dépassement, on détecte une surcharge permanente du réseau, par celui respectif des services significatifs.

2. Procédé suivant l'une des revendications précédentes, **caractérisé en ce que** l'on compare la valeur d'utilisation d'un service (A, B, C) à une valeur (14) mémorisée de l'utilisation maximum pour ce service et/ou à une autre valeur (14) mémorisée de l'utilisation maximum globale et, si l'utilisation maximum mémorisée est atteinte ou dépassée, on mémorise la valeur d'utilisation en cours comme nouvelle utilisation maximum.

3. Procédé suivant l'une des revendications précédentes, **caractérisé en ce que** l'on compare la valeur d'utilisation calculée d'un service à une valeur (14) mémorisée de l'utilisation minimale pour ce service et/ou à une autre valeur (14) mémorisée de l'utilisation minimum globale et, si l'utilisation minimum mémorisée est atteinte ou si l'utilisation lui devient inférieure, on mémorise la valeur d'utilisation en cours comme nouvelle utilisation minimum.

4. Procédé suivant l'une des revendications précédentes, **caractérisé en ce que** les diverses valeurs (16, 18) de seuil peuvent être adaptées dynamiquement par un participant (30, 32, 34, 36) au réseau ou par une instance supérieure hiérarchiquement.

5. Appareil de réseau pour effectuer un procédé suivant l'une des revendications 1 à 4, notamment switches, hubs, router, adaptateur de réseau ou autre répartiteur de réseau.

6. Agencement de réseau, comprenant au moins un appareil de réseau suivant la revendication 5.

7. Agencement de réseau suivant la revendication 6, **caractérisé en ce que** l'agencement de réseau fait partie d'un système d'automatisation industriel ou peut y être couplé.
